# EUROPEAN PATENT APPLICATION

(11) **EP 1 721 554 A1**
(43) Date of publication of application: **15.11.2006**
(21) Application number: 05252878.3
(22) Date of filing: 11.05.2005
(51) Int. Cl.: A47J 43/28

(54) **Culinary Utensil**

(71) Applicant: MAXPAT TRADING & MARKETING (FAR EAST) LIMITED, Kowloon, Hong Kong (CN)
(72) Inventor: YU, Siu Kwan, Kowloon (HK)
(74) Representative: Howe, Steven

(57) **Abstract**

A culinary spatula (1) comprising a main body (2) including a handle portion (4) and a utility portion (6) having a front end (16) covered with an elongate member (18) made of a heat resistant soft plastic material, and across the front end wherein the member sandwiches and/or is fixedly attached to the front end such that the member and the front end together integrally form the utility portion of the spatula.

## Description

### FIELD OF THE INVENTION

This invention relates to culinary utensils for mixing or stirring foodstuffs in a cooking vessel and particularly culinary spatulas or culinary spoons or the like.

### BACKGROUND OF THE INVENTION

Non-stick cooking vessels such as non-stick pans and pots have become very popular in the last two decades. The cooking surface of these utensils is normally covered with one or more layers of a non-stick material or Teflon™ or Teflon™-like substance. One common flaw with these vessels is that the non-stick surface tends to deteriorate rather rapidly such that they often become no longer non-stick after a short period of time. While non-stick vessels are desirable in that it is easy to use and easy to clean, their durability is often poor.

The present invention is directed to overcoming the problems associated with such cooking vessels, or at least to provide a useful alternative to the public.

### SUMMARY OF THE INVENTION

According to the present invention, there is provided a culinary spatula comprising a main body including a handle portion and a utility portion having a front end covered with an elongate member made of a heat resistant soft plastic material and across the front end, wherein the member sandwiches and/or is fixedly attached to the front end such that the member and the front end together integrally form the utility portion of the spatula. The member may for example be attached to the front end by gluing itself thereat such that the member and the front end together integrally form the utility portion of the spatula. It is to be noted that the term "spatula" referred hereinafter means any spatula or spatula-like utensils used for stirring or mixing foodstuffs in a cooking vessel. Such a culinary spatula when used with a non-stick cooking vessel is particularly advantageous because the soft member will protect the vessel from scratches and deterioration over time.

Preferably, the main body may be made of stainless steel. The use of stainless steel for making the main body of a culinary utensil although generally not uncommon is unique in the context of the present invention. It is to be noted that conventional spatulas are normally made of wood or a plastic material which are necessarily softer such that they would not easily damage the non-stick surface of a cooking vessel. Yet, such plastic or wooden spatulas are not durable and more difficult to clean and the use thereof is often not desirable. The use of stainless steel as a material of the main body of the spatula in combination with a soft plastic member at the front end allows the spatula to become more durable and yet it would not damage non-stick surfaces of cooking vessels.

Suitably, the handle may generally be elongate in shape and may be perpendicular to a lateral width of the front end of the utility portion. The front end may be slightly slanted for better engagement with foodstuffs or the surface of a cooking vessel to suit a particular cooking need.

Advantageously, the material may be selected from the group consisting of heat resistant silicone and nylon. The requirement on the material is mainly that it be heat resistant under normal cooking conditions, sufficiently soft, non-damaging to non-stick surfaces and safe with food contact.

Preferably, the member may comprise an upper portion and a lower portion.

Suitably, the front end may be provided with one or more openings located adjacent an edge of the front end such that when the upper portion and the lower portion of the member are contactable of each other across the opening or openings when, for example, subjected to sufficiently high pressure and/or temperature. In particular, the portions at the openings may be slightly melted and fused together under relatively high pressure and/or heat for fixedly attaching thereat.

The upper portion and the lower portion preferably meet at a tapered end of the member.

Advantageously, the culinary spatula may be provided with two elongate said openings at the front end. Alternatively, the spatula may be provided with at least ten said openings, which may be circular in shape.

Preferably, the spatula may be provided with further means for enhancing fixed attachment of the member to the front end. The enhancement means may be in the form of notches provided on opposite sides of the front end.

Suitably, the member may be fixedly secured on the front end by pressing thereof.

Advantageously, the member may be in the form of an elongate lip covering the front end of the utility. In particular, the member may have a thinner outer portion suitable to engage, contact or stir foodstuffs in a cooking vessel.

### BRIEF DESCRIPTION OF THE DRAWINGS

An embodiment of the present invention is described, by way of example only, with reference to the following drawings in which:
Figure 1 is a perspective view of a culinary spatula according to an embodiment of the present invention;
Figure 2 is an alternative perspective view of the spatula of Figure 1 but without a protective member;
Figure 3 is a perspective view of a culinary stirring spoon according to another embodiment of the present invention;
Figure 4 is a perspective view of the spoon shown in Figure 3 but without a protective member;
Figure 5a is a top view of the spoon of Figure 3;
Figure 5b is a cross section view taken along line A-A of Figure 5; and
Figure 5c is an enlarged cross section view showing a front portion of the spoon of Figure 5b.

### DETAILED DESCRIPTION OF PREFERRED EMBODIMENTS

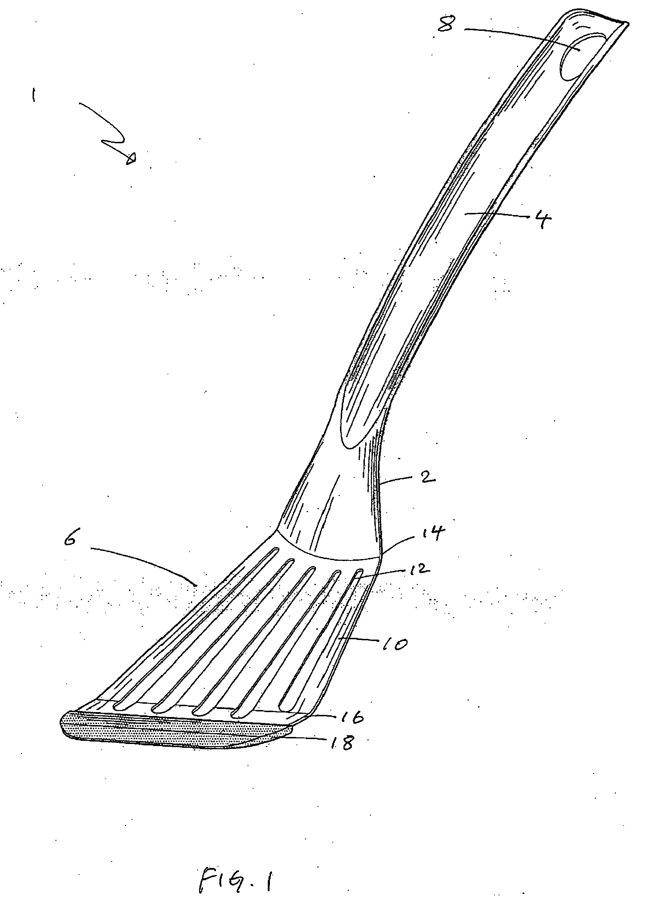

Turing to the figures, Figures 1 to 2 shows a first embodiment of a culinary utensil in the form of a spatula according to the present invention. The spatula, generally designated 1, comprises a durable and metallic main body 2 including an elongate handle portion 4 and a utility portion 6. The handle portion 1 is provided with an opening 8 such that the spatula 1 may be secured to a hook for storage in a kitchen.

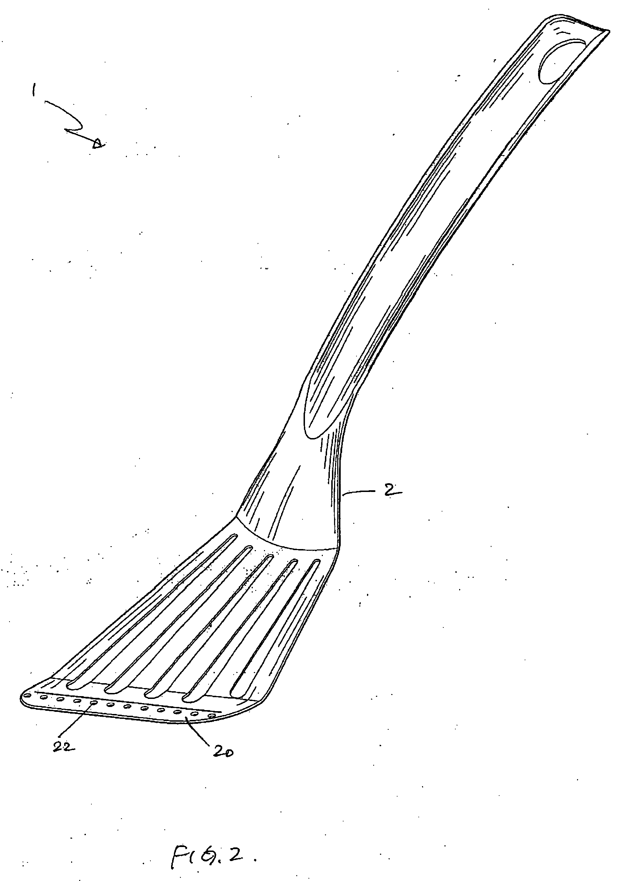

The utility portion 6 comprises a generally flat member 10 provided with a number of slits 12 arranged roughly parallel to each other. The flat member 10 has a narrower rear region 14 connecting to the handle portion 4 and a wider front region 16. The front region 16 is provided with an elongate and relatively thin strip 18 made of a heat resistant silicone material. The strip 18 is relatively soft and non-scratching to non-stick surfaces of cooking vessels. Figure 2 shows the main body 2 of the spatula 1 of Figure 1 but without the strip 18. The utility portion 6 of the main body 2 is provided with a front end 20 at which the strip 18 is secured. At the front end 20 of the main body 2, a number of circular openings 22 are provided. It can be envisaged that the strip 18 provided with a upper portion and a lower portion on attaching to the utility portion 6 sandwiches the front end 20 of the main body 2 along the area of the openings 22. To reliably secure the strip 18 to the utility portion 6, the strip 18 is subjected to sufficiently high pressure and/or temperature. To ensure that the strip 18 would not be undesirably detached therefrom, a suitable amount of an appropriate glue is applied along the openings 22 before the strip 18 is attached to the front end 20. The main body 2 of the spatula 1 is made of stainless steel while as explained above the strip 18 is made of a soft silicone material. Alternatively, the strip 18 may be made of a heat resistant nylon. Of course, whether silicone or nylon or any other soft plastic material is used, it should be safe with food contact.

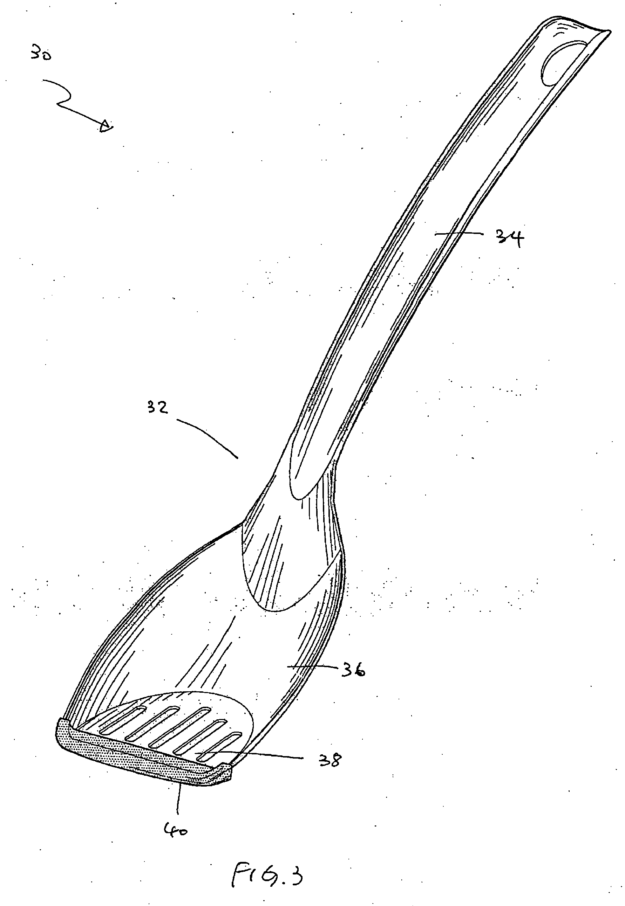

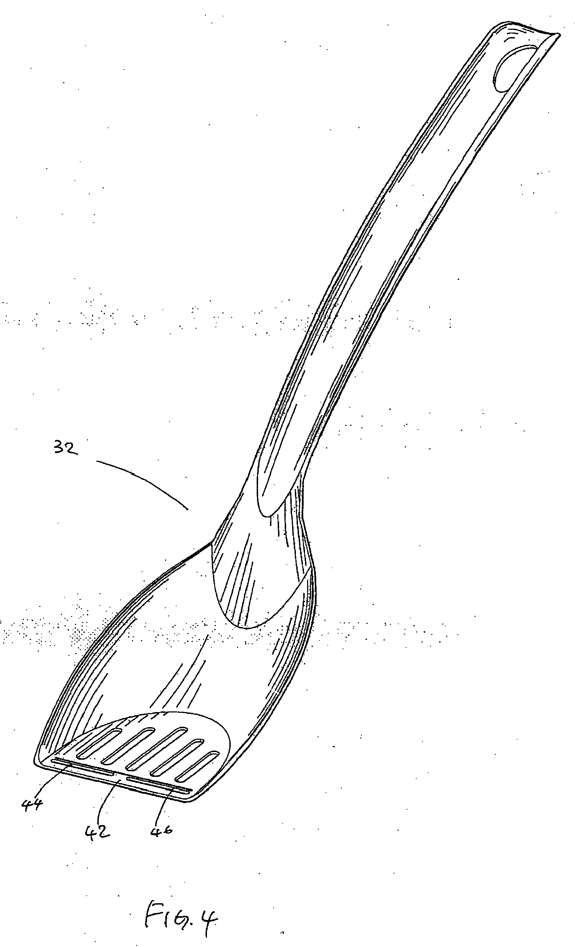

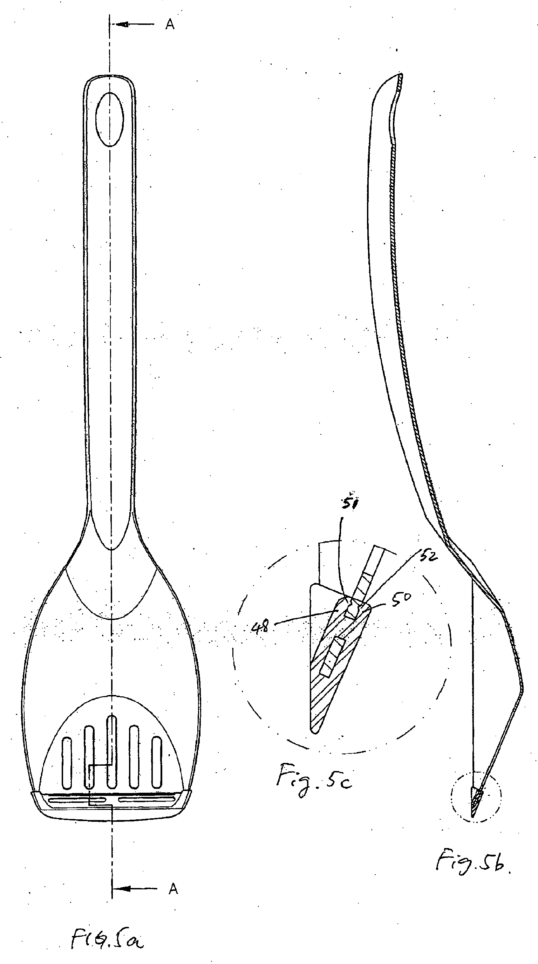

Figures 3 to 5c illustrate a second embodiment of a culinary utensil, generally designated 30, according to the present invention. The spoon 30 is generally similar to the spatula 1 of the Figure 1 in terms of its overall construction. The utensil 30 comprises a main body 32 including a handle 34 and a utility portion 36, and the utility portion 36 resembles a spoon shape structure. The utility portion 36 likewise is provided with a front region 38 to which a similar soft strip 40 is attached thereto. The soft strip 40 is made of a heat resistance silicone. As shown in Figure 4, at a front end 42 of the main body 32 is provided with two elongate openings 44, 46 over which an upper portion 48 and a lower portion 50 the strip 40 covers (see Figure 5c). It is envisaged that during manufacturing, the strip 40 once attached to the front end 42 of the main body 32 is subject to sufficiently high pressure and/or temperature such that it is permanently sealed at the area with the openings 44, 46.

Figures 5b to 5c illustrate the detailed construction of the front region 38 of the spoon 30. Referring specifically to Fig. 5c, the front end 42 of the main body 32 is provided with the openings 44, 46 and two notches 51, 52 adjacent to the openings 44, 46. Both the openings 44, 46 and the notches 51, 52 are provided to facilitate the attachment of the strip 40 to the front end 42 of the main body 32.

It is envisaged that when the strip 40 is fitted to the front end 42 with the upper portion 48 and the lower portion 50 sandwiching the region of the openings 44, 46 and the notches 51, 52, the strip 40 is fixedly secured thereat when subjected to pressure and/or temperature sufficiently high such that the upper portion 48 and the lower portion 50 at the region of the openings 44, 46 are slightly melted and then joined together. To avoid loosening of the strip 40 from the front end 42, a suitable amount of glue is added at the openings 44, 46 and also at the notches to ensure the adhesion of thereat.

## Claims

1. A culinary spatula (1, 30) comprising a main body (6, 32) including a handle portion (4, 34) and a utility portion (10, 36) having a front end (16, 38) covered with an elongate member (18, 40) made of a heat resistant soft plastic material and across the front end (16, 38), wherein the member (18, 40) sandwiches and/or is fixedly attached to the front end (16, 38) such that the member (18, 40) and the front end (16, 38) together integrally form the utility portion (10, 36) of the spatula (1, 30).

2. A culinary spatula (1, 30) as claimed in Claim 1 wherein the main body (6, 32) is made of stainless steel.

3. A culinary spatula (1, 30) as claimed in Claim 1 wherein the handle portion (4 34) is generally elongate in shape and is perpendicular to a lateral width of the front end (16, 38) of the utility portion (10, 36).

4. A culinary spatula (1, 30) as claimed in Claim 1 wherein the member (18, 40) is selected from the group consisting of heat resistant silicone and nylon.

5. A culinary spatula (1, 30) as claimed in Claim 1 wherein the member (18, 40) comprises an upper portion (48) and a lower portion (50).

6. A culinary spatula (1, 30) as claimed in Claim 5 wherein the front end (16, 38) is provided with one or more openings (22, 44, 46) located adjacent an edge (42) of the front end (16, 38) such that when the upper portion (48) and the lower portion (50) of the member (18, 40) are contactable of each other across the opening or openings (22, 44, 46) when subjected to sufficiently high pressure and/or temperature.

7. A culinary spatula (1, 30) as claimed in Claim 5 wherein the front end (16, 38) is provided with one or more openings (22, 44, 46) located adjacent an edge (42) of the front end (16, 38) such that when the upper portion (48) and the lower portion (50) of the member (18, 40) sandwiching the front end (16, 38) are pressed thereon, the upper portion (48) and the lower portion (50) are meltable at the opening or openings (22, 44, 46) for fixedly attaching thereat.

8. A culinary spatula (1, 30) as claimed in Claim 5 wherein the upper portion (48) and the lower portion (50) meet at a tapered end.

9. A culinary spatula (1, 30) as claimed in Claim 1 provided with two elongate said openings (44, 46).

10. A culinary spatula (1, 30) as claimed in Claim 1 provided with at least ten said openings (22).

11. A culinary spatula (1, 30) as claimed in Claim 1 provided with means for enhancing fixed attachment of the member (18, 40) to the front end (16, 38).

12. A culinary spatula (1, 30) as claimed in Claim 11 wherein the means is in the form of notches (51, 52) provided on opposite sides of the front end (16, 38).

13. A culinary spatulas (1, 30) as claimed in Claim 1 wherein the member (18, 40) is fixedly secured on the front end (16, 38) by pressing thereof.

14. A culinary spatula (1, 30) as claimed in Claim 1 wherein the member (18, 40) has a tapered outer portion suitable to engage, contact, stir or scope foodstuffs in a cooking vessel.
